(19) Europäisches Patentamt
European Patent Office
Office européen des brevets

(11) Publication number: 0 112 118 B1

(12) **EUROPEAN PATENT SPECIFICATION**

(45) Date of publication of patent specification: 23.05.90

(51) Int. Cl.$^5$: **C 09 B 63/00**, C 09 B 67/22

(21) Application number: 83307421.4

(22) Date of filing: 06.12.83

(54) **Composite pigments and process for preparing the same.**

(30) Priority: 06.12.82 IT 2461982

(43) Date of publication of application: 27.06.84 Bulletin 84/26

(45) Publication of the grant of the patent: 23.05.90 Bulletin 90/21

(84) Designated Contracting States: BE CH DE FR GB LI NL

(56) References cited:
US-A-3 520 869

CHEMICAL ABSTRACTS, vol. 95, no. 20, November 1981, page 100, no. 171105d, Columbus, Ohio, US; & JP-A-81 61 461 (TOYO INK MFG. CO., LTD.) 26-05-1981

(73) Proprietor: Montedison S.p.A.
31, Foro Buonaparte
I-20121 Milan (IT)

(72) Inventor: Paffoni, Camillo
15, via Gozzano
I-28076 Pogno Novara (IT)
Inventor: Carlini, Filippo Maria
7, Corso Torino
I-28100 Novara (IT)
Inventor: Bottaccio, Giorgio
16, Via Manin
I-28100 Novara (IT)
Inventor: Osti, Alberto
53, Via Rombon
I-20134 Milano (IT)

(74) Representative: Whalley, Kevin et al
MARKS & CLERK 57/60 Lincoln's Inn Fields
London WC2A 3LS (GB)

EP 0 112 118 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to composite pigments and to a process for preparing the same.

In particular, the invention relates to a new class of composite organic-inorganic pigments, to a process for preparing the same, and to their use in colouring (dyeing) products, air-drying and stove-drying enamels, in the pigmentation of plastics materials, inks, and in the printing of fabrics, etc., by means of known conventional techniques.

More particularly, the invention relates to a class of ternary composite pigments comprising a binary inorganic constituent based on Ti-dioxide and Al-hydroxide, possessing high physical pigmentary characteristics, and of an organic or chromophoric dyeing constituent selected from particular azoic dyes containing in their structure at least one carboxylic acid (—COOH) function and/or a sulphonic (—$SO_3H$) acid function, substantially salified, which by itself may not necessarily possess pigmentary characteristics, intimately associated with the inorganic constituent by co-precipitation.

The bond between the organic and inorganic constituents is found to be so strong and stable as to ensure in the pigmentary complex high applicative characteristics.

In the description that follows, the term "composite pigment" shall be understood to refer to a pigmentary material comprising an association of a dyeing organic constituent with a solid inorganic binary substrate or carrier, based on Ti-dioxide and Al-hydroxide, obtained according to a co-precipitation method that will be more clearly described subsequently.

The above described association of the particular organic dye with the inorganic binary substrate or carrier gives rise to a ternary composition having a high photostability and high pigmentary characteristics that will make it suited for various different applications.

The present invention, moreover, provides a process for the preparation of such ternary pigments and to the application of the pigments obtained.

The pigments obtained form, in fact, industrial products suitable for a wide range of applications: they are insoluble in water and in the common organic solvents, besides possessing a good dyeing power; they have a high photostability, an excellent thermo- or heat stability, a fastness to solvents, bases and acids, a good resistance to migration in plastics, and to overpainting with stoving enamel; also they may be obtained with various degrees of covering power.

These pigments thus find use in varnishing products, in air-drying enamels and stoving enamels, and in the pigmentation of plastics materials in which there is required a high photostability also in the medium and light tones associated with a heat stability and fastness to solvents.

In the field of pigments, various researches have been made, in particular aiming at obtaining pigments having dulling properties, photostability and in general pigmentary characteristics comparable with those of conventional inorganic pigments such as chromium yellows, cadmium yellows, the preparation and use of which are subject to increasingly severe limitations because of their toxicity.

In order to avoid the use of the toxic pigments, there have been carried out various researches based on the attribution and/or enhancing of the pigmentary properties in organic dyes of an acid type, by means of lacquering and associated technologies that may lead to complexes of a pigmentary nature consisting of an inorganic constituent.

In this connection it is known that the acid dyes are compounds that contain in the molecule acid groups (COOH, $SO_3H$) which impart to the products a solubility in water or in alkaline media, and are mainly used in the dyeing of either natural or synthetic polyamidic fibres. It is likewise known that some of these compounds may form insoluble compounds ("toners"), lacquers, in combination with alkaline-earth metal salts (Ca, Ba, Mg, Sr) and/or salts of other metals (Al, Mn, Zn).

These latter, like most of the organic pigments, do not possess the dulling properties (hiding power) of conventional inorganic pigments (chromium yellows, cadmium yellows); on the contrary, in the dyeing of manufactured articles, they are mechanically associated with inorganic fillers of various kinds. Depending on the type of application, such fillers or charges may consist of compounds (for example barites) of modest hiding power or compounds (for example $TiO_2$) of high hiding power.

Nevertheless, in the case of fillers with a high hiding power ($TiO_2$), there is required the use of highly coloured compounds and/or the use of compounds in great quantities in order to acheive high intensities of colouring, which is economically disadvantageous.

It is also known from GB—A—1366531 to associate organic pigments with inorganic fillers, during the synthesis of the pigment itself. In fact, there are known products of the lacquer type, which are prepared in the presence of inorganic substrates among which the most common are basic Al compounds (basic sulphate — Pigment White 24) or mixtures of $BaSO_4$ and aluminium hydroxide (Pigment White 23).

According to the above technique, the precipitation of the lacquers occurs normally in two stages; for example, there is first precipitated from Al sulphate, under controlled pH— and temperature conditions, the basic aluminium sulphate; then, in the given order, there are added a solution of the dye and a solution containing a metered quantity of $BaCl_2$ in such a way as to cause the simultaneous precipitation of the insoluble salt of the organic dye and of the barium sulphate on the $Al(OH)_3$ substrate. This technique substantially allows the preparation *in situ* of the inorganic substrate and allows there to be obtained a dye-receptive surface which however has poor hiding power.

According to another process, known from DE—A—2338759, in the synthesis stage, there are used

inorganic substrates of high hiding power ($TiO_2$). In fact, it is known that acid dyes may be precipitated under controlled pH conditions (pH = 2 − 5) in the presence of $TiO_2$ and other inorganic substrates.

In the described cases, however, the resulting products, from the point of view of practical applications do not offer appreciable advantages in comparison with the mechanical mixtures of the single components.

According to another technique described in US—A—3477866, the acid dye is precipitated, in the form of Al lacquer, Cr lacquer, etc., in the presence of lignin sulphonates.

Common characteristics of these co-precipitation processes is that there is obtained the formation of organic-inorganic compositions substantially comprising, on a binary base, a lacquer of an organic dye supported by precipitation on an inorganic substrate.

The present invention aims to provide organic-inorganic products on a ternary base, possessing hiding powers, colouring powers and a photostability (fastness to light), and pigmentary characteristics enabling them to be used instead of the conventional coloured inorganic pigments (chromium yellows, cadmium yellows) which are objectionable from the point of view of environmental safety.

Another aim of the invention is to provide organic-inorganic products which on the whole will display applicative pigmentary properties superior to mechanical mixtures of the single components and superior to those of the mechanical mixtures that are obtainable with the most suitable organic pigments being used at present.

The present invention in one aspect provides composite ternary organic-inorganic pigments comprising from 70% to 90% by weight of a binary inorganic component of titanium dioxide and aluminium hydroxide, and from 10% to 30% by weight of a co-precipitated organic component, comprising an organic azoic dye containing in its structure at least one carboxylic (—COOH) and/or sulphonic (—$SO_3H$) acid function, of the formula (I):

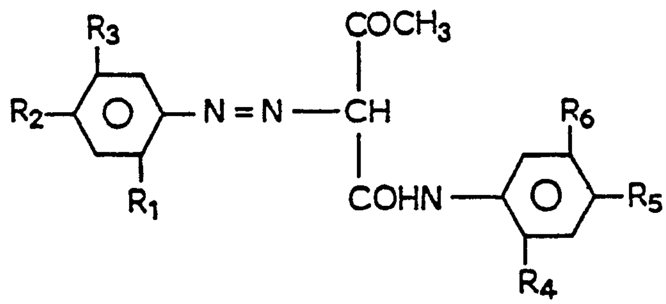

(I)

wherein:

$R_1$ is —$NO_2$, —$SO_3H$, or —COOH;

$R_2$ is —$NO_2$, —$SO_3H$, alkyl, or alkoxyl;

$R_3$ is H, halogen, or alkyl;

$R_4$ and $R_5$ are each H, halogen, alkyl, or alkoxyl; and

$R_6$ is H, halogen, or alkoxyl;

and wherein the carboxylic and/or sulphonic group of dye (I) is salified with cations of a metal selected from alkaline-earth metals, Al, Mn and Zn.

The composite pigments on a ternary base, according to the present invention, preferably have a content of azoic dye of formula (I) containing at least one salified —COOH or —$SO_3H$ group of from 10% to 25% by weight, and a weight ratio $TiO_2$/salified organic dye of from 1:1 to 5:1, more preferably from 2:1 to 4:1, and a weight ratio $Al(OH)_3$/salified organic dye greater than or equal to 1.

The composite pigments of the present invention, having the above specified particular pigmentary characteristics, are obtained according to a co-precipitation process that forms another aspect of the present invention.

Thus the invention in another aspect provides a process for the preparation of a composite ternary pigment according to the first aspect of the invention, wherein a solution and/or suspension of the organic acid dye of formula (I) in an aqueous medium having a pH greater than 10.5 by the presence of sodium aluminate, after the introduction of the titanium dioxide, is gradually brought over a period of time of from 0.5 to 2 hours to a pH of from 9.5 to 10.5 and then, after the introduction of a salt of a metal selected from alkaline-earth metals, Al, Mn and Zn, in an amount substantially greater than the stoichiometric amount with respect to the acid dye, is brought to a pH of from 6.5 to 7.5 by the addition of a mineral acid at a temperature of from 40°C to 8°C within a period of time from 0.5 to 2 hours.

Thus the preparation process of the invention comprises carrying out, under controlled pH conditions that are substantially alkaline, the co-precipitation of the organic acid dye of formula (I) with aluminium hydroxide, by means of acidification of an aqueous solution and/or suspension (dispersion) of the acid dye in sodium aluminate, in the presence of titanium dioxide, at 40°—80°C, and the successive lacquering by treatment with an aqueous solution of a salt of an alkaline-earth metal (Ca, Mg, Ba, Sr) or of Al, Mn or Zn.

The starting materials of an inorganic nature used in this process are: titanium dioxide or titanium

dioxide-based pigments, and sodium aluminate.

As far as the $TiO_2$ is concerned, there may be used any of the commercial types obtainable *via* a sulphate or *via* a chloride process; normally they present surface treatments suited for conferring them specified properties of photostability (light fastness), dispersability, etc. There may also be used types of $TiO_2$ rutile, not post-treated and suitably ground. The use of $TiO_2$ anatase or of calcination intermediates with a rutile-anatase structure is also possible. Lastly, there may be used $TiO_2$-based coloured inorganic pigments, such as C.I. Pigment Yellow 53 (Ti-Ni-Sb)$O_2$ and C.I. Pigment Yellow 118 (Ti-Ni-Sb-Cr)$O_2$.

The sodium aluminate is preferably used in the form of an aqueous solution thereof with a titre of, for example, 500—650 g/lt of $NaAlO_2$.

The dyes of formula (I), as herein above defined, are particularly suitable for use in the preparation process of ternary composite pigments of the present invention, inasmuch as, containing in their molecule at least one —COOH or —$SO_3H$ group, they are susceptible to forming lacquers, that are substantially insoluble, with alkaline-earth metals, or with Al, Mn and Zn; moreover they are barely soluble in water and are readily soluble in alkaline media from which latter they are precipitable by acidification to a pH greater than or equal to 7, in addition to which they possess high molar extinction coefficients so that it is possible to obtain products with high tintorial (dyeing) properties, even when operating with dye-levels of the order of 10% by weight on the finished product.

The dyes of formula (I) have already been described in the technical literature and/or are commercially available. They are preparable according to the known methods of the prior art.

The concentration of dye in the aqueous solution or suspension in sodium aluminate may vary within a wide range, depending on its solubility. For example, there may be practically used concentrations from 5 to 30 g/lt.

The quantity of $NaAlO_2$ used depends, on the contrary, on the desired type of pigmentary composition (degree of transparency). The $NaAlO_2$ may optionally be used associated with a minor quantity of NaOH.

The dissolution or dispersion of the dye is carried out at a temperature from 40°C to 80°C, preferably from 40°C to 60°C, that is within the same temperature range to be maintained in the successive co-precipitation phase.

The addition of $TiO_2$, in its chosen structure, is preferably carried out in the form of an aqueous paste prepared separately. Alternatively, there may be directly used a filtration cake of $TiO_2$ exactly as it is obtained at the production stage, before being dried. The $TiO_2$ may also be added directly to the solution or suspension of the dye in the form of powder. The same applies for the $TiO_2$-based pigments.

The co-precipitation of the aqueous solution or suspension of the dye in the presence of sodium aluminate and possibly NaOH is achieved by using a mineral acid, preferably HCl. The concentration of the acid is not critical: operational values, in the case of the use of HCl, are from 50 to 200 g/lt or equivalent; the co-precipitation phase will thus be followed in a more effective way.

The first co-precipitation phase, under operational process conditions, requires a time of 0.5 to 2 hours, more preferably from 1 to 1.5 hours.

At the end of the first co-precipitation phase, to the aqueous slurry having a pH of about 10, there is added the solution of the chosen metal, Ca, Ba, Mg, Sr, Al, Mn or Zn. This addition is carried out within a time of about 30 minutes.

The metal is additioned in the form of a soluble salt, in an amount which is at least stoichiometric with respect to the amount necessary for co-precipitating the corresponding salt, of the acid dye used, in the form of an insoluble lacquer. In order to ensure this effect, there are preferably used amounts that are from 2 to 4 times greater than the stoichiometric amount.

After the introduction of the solution of the metal salt, the dye precipitates in a salified form together with the Al-hydroxide in a substantially alkaline medium. This process allows the formation of a coloured coating of the $TiO_2$ and the formation of a coloured microcrystalline $Al(OH)_3$.

The combined effect of the above described conditions leads to a situation in which the final pigmentary product assumes chemical-physical and applicational characteristics such as to make these new pigments very similar to those of the chromium yellow and cadmium yellow type.

At the end of the addition of the salt and maintaining the obtained suspension within the same temperature range at which was carried out the co-precipitation phase, under constant stirring, the pH value is gradually brought first into the pH value range of from 8.5 to 9 and then to a pH value of from 6.5 to 7.5, by the addition of a mineral acid (HCl).

The final neutralization phase is preferably conducted in a total time of from 45 to 90 minutes, but in any case until the completion and stabilization of the co-precipitated suspension has been obtained. Overall, the duration of the process is from about 2 to about 4 hours.

Thereupon there follow the operations of separating, drying, etc. conducted according to generally conventional methods.

For example, the product is filtered, washed in order to remove the soluble salts, and finally dried. The drying is suitably conducted at a temperature from 50°C to 100°C, more preferably 70°C to 80°C.

The pigment thus obtained is substantially already in the physical condition suited for its use. Nonetheless this process is compatible with any of the conventional post-treatment operations.

For example, the product may be ground, preferably in a micronizing mill or in an air-jet mill. This type of grinding allows products to be obtained that are easily dispersible in oily vehicles, plastics materials,

inks, etc. and which will offer improved applicational performances such as photostability (light fastness), dyeing power, hiding power, and brightness of the film of paint or ink.

The concentration of dye in the pigment as well as the $TiO_2$/dye weight ratio depend on the nature of the dye and on the pigmentary characteristics that it is desired to achieve.

Thus, for example, using dyes that display high tintorial properties, the concentration of dye may vary from 10% to 20% by weight, while the $TiO_2$/dye weight ratio may reach values from 1 to 5. In this case the pigments are characterized in that they display high hiding power and adequate colouring power.

The remaining inorganic part consists of aluminium hydroxide. The weight ratio $Al(OH)_3$/dye is at least 1 and depends on the $TiO_2$/dye weight ratio.

Diffractometric analyses of the products show clearly, in addition to the presence of rutile $TiO_2$ and/or anatase $TiO_2$, the presence of beta-$Al(OH)_3$ and of the microcrystalline product corresponding to the dye, in the form of a Ca, Mg, Al, Ba, Sr lacquer, extremely dispersed.

The pigments according to the present invention preferably have a specific surface area of from 20 to 100 $m^2/g$. more preferably from 40 to 60 $m^2/g$. The morphological profile of the pigments comprises two types of elementary particles: the $TiO_2$ particles covered by a coating of Al-hydroxide and/or of a dye; and particles of Al-hydroxide in which the salified dye is dispersed.

The pigments obtained according to the present invention have a composition that varies within a wide range, depending on the nature and quantity of the dye and of the inorganic substrate ($TiO_2$ and $Al(OH_3)$), and on the granulometry, and specific surface area etc.

The obtained pigments offer, moreover, the advantage of being constituted by an inorganic component or substrate of low cost, and suited for imparting to the pigments excellent pigmentary characteristics, that is stably associated by co-precipitation with an organic dye developing a high dyeing power and ensuring pure tones.

This advantage may be better appreciated when it is considered that the organic dyes used according to this invention, as already indicated, may not possess by themselves any pigmentary characteristics which, on the contrary, is achieved in the composite pigments of the present invention.

This allows the use of such organic dyes to be successfully and economically extended to pigmentary applications of considerable industrial interest.

The present invention thus represents a considerable contribution to the solution of the problem represented by the high toxicity and/or high degree of pollution connected with the use of inorganic pigments such as the chromium and cadmium-based pigments.

The mechanical and/or thermal (heat) treatments and/or treatments with solvents, employed in conventional techniques in the use of pigments in various applications, do not substantially modify the granulometry and thus the pigmentary characteristics of the products obtained according to the present invention.

Also the presence, in the form of finely and homogeneously distributed particles, in the organic-inorganic system, of aluminium hydroxide increases in the same its known improving characteristics of dispersibility and flame-retarding (inhibiting) capacity in general imparted to pigments when it is conventionally used as a filler or extender, at low cost, without adversely influencing the brightness of the tones and the colouring power.

The composite ternary pigments according to the present invention may be suitably used for the colouring (dyeing) of plastics materials, and for the preparation of lacquers, stoving enamels and air-drying enamels, inks and pastes for the printing of textiles and natural and synthetic fibres.

The invention will be further described with reference to the following illustrative Examples. In the Examples, all parts and percentages are by weight, unless otherwise stated.

Example 1

Into a 3 litre beaker, fitted with a mechanical stirrer under vigorous stirring, there were introduced in 1000 ml of water 15 grams of dye of the formula:

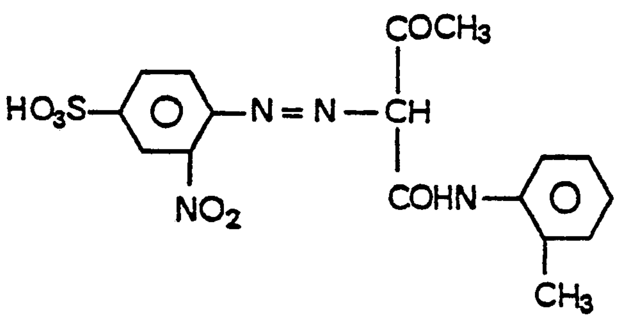

C.I. Yellow 62

The suspension was then heated up to a temperature of from 50°C to 60°C, after which there were added 30 ml of NaOH having a concentration of 80 g/lt. and successively there were added 30 grams of $NaAlO_2$ (corresponding to 50 ml of a solution with a concentration of 600 g/lt).

The pH attained a value of 11.2 and there was observed an incomplete solution of the dye. Thereupon there was additioned a $TiO_2$ rutile dispersion consisting of 40 g of $TiO_2$ in 200 ml of water.

The slurry was kept under stirring for 30 minutes, after which there was started a slow, gradual acidification with HCl in a 50 g/lt concentration. Once there was attained, in 30 minutes, a pH equal to 10.5, at a temperature of from 50°C to 55°C, there were added to the mixture 9 grams of $CaCl_2$ dissolved in 60 ml of water over a period of time of 10 minutes.

After 20 minutes, slow and gradual acidification with HCl was resumed and continued until a pH of 9.5 was reached, and then, after 30 minutes, until a pH of 7 was reached.

Thereupon the pH was allowed to stabilize and, after 60 minutes, still maintaining a temperature of from 50° to 55°C, it was filtered.

The mixture was thereupon washed with deionized water in order to remove the soluble salts, whereafter the filtration cake was dried at 80°C and ground in an "ALPINE model CONTRAPLEX 63 C" apparatus, thereby obtaining 80 g of a yellow powder.

Elementary analysis of the product obtained showed a carbon content corresponding to 18.5% of organic dye.

Diffractometric analysis of the pigment indicated the presence of $TiO_2$ rutile, beta-alumina and a microcrystalline dye in the form of a lacquer intimately mixed together with the alumina.

The specific surface area of the product was 35 $m^2$/gram, determined according to the SORPTOMETER method.

Example 2

There was followed the procedure as described in example 1, except that the amount of dye which passed was 20 grams, but still utilizing amounts of 30 g of $NaAlO_2$ and 40 grams of $TiO_2$.

There was obtained 85 g of a yellow pigment with a colouring power superior to the product of example 1, associated with a good hiding power and good general characteristics.

Example 3

There was followed the procedure as described in example 1, except that there was utilized only 30 g of $TiO_2$.

There were obtained 70 g of a yellow pigment with a colouring power superior to the product of example 1, but with a hiding power inferior to the product of example 1.

Examples 4—12

Following the procedure as described in example 1 but using different dyes, the following pigments were obtained.

| Ex. | Dye | Lacquering metal | Tone of pigment |
|---|---|---|---|
| 4 | 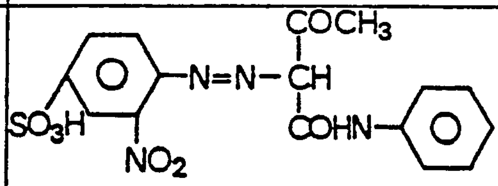 | Ca | greenish yellow |
| 5 | 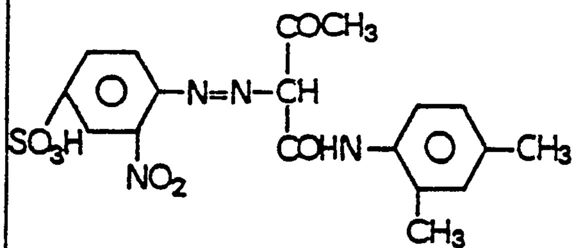 | Ca | yellow |
| 6 | 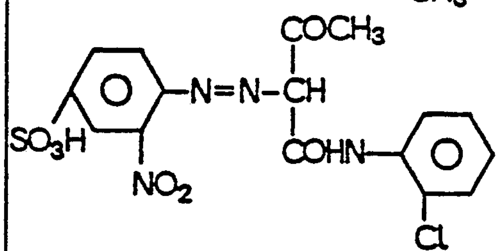 | Ca | greenish yellow |
| 7 | 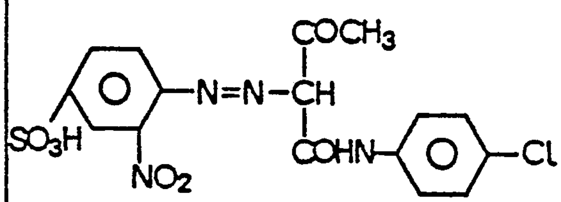 | Ca | greenish yellow |
| 8 | 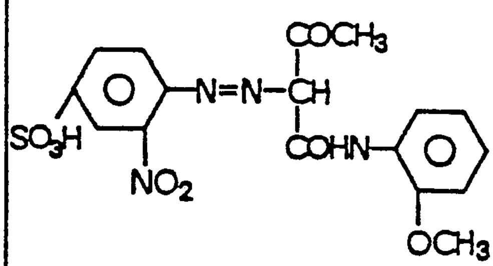 | Ca | yellow |

| Ex. | Dye | Lacquering metal | Tone of pigment |
|---|---|---|---|
| 9 | 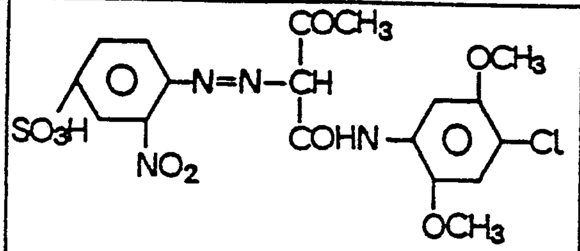 | Ca | yellow |
| 10 | 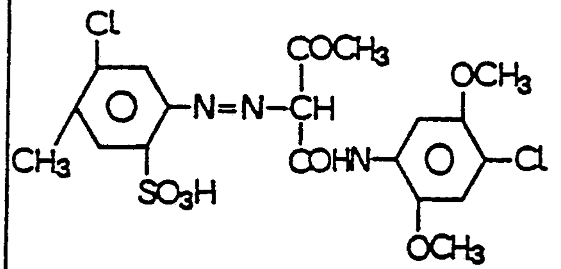 | Ca | yellow |
| 11 | 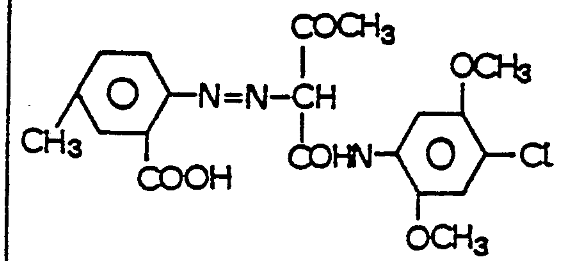 | Al | yellow |
| 12 | 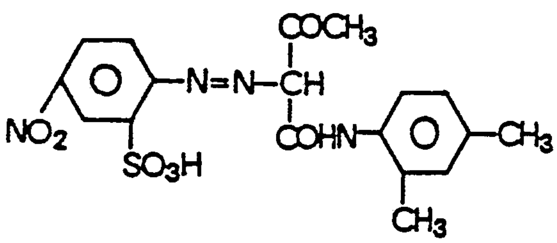 | Ca | yellow |

Example 13

Application in a vehicle for rotogravure

To 1.5 grams of pigment obtained according to example 1, there were added 22.5 g of a ground vehicle consisting of a phenolic resin suitably prepared in xylol, in a weight ratio of 30:70.

The formulated product was ground in a two-arm planetary flapping mill of the Red-Devil Model 5400 type. Thereby there was obtained a fluid yellow ink which was spread onto a cardboard provided with a series of black bands for evaluating the hiding power of the ink by means of 6 µm spreading bars and of 24 µm spreading bars.

In this way there were evaluated the tone, colouring power and the hiding power of the pigment, which proved to be good as it showed high fastness characteristics.

Example 14

Application in polyvinylchloride

0.3 grams of the pigment obtained according to example 1 were dispersed in 70 g of polyvinylchloride powder Syncron 548 FM (Trade Mark of MONTEDISON S.p.A.) with:

30 grams of dioctylphthalate as a plasticizer;
0.2 grams of U.V. stabilizer;
0.2 grams of thermal stabilizer (organometal Sn salt).

The mixture was kneaded in a bicylindrical mill for 4 min. at 150°C. Thereby there were obtained yellow-coloured dull sheets with good general fastness characteristics.

Example 15

Application for stoving enamel

5 g of the pigment obtained according to example 1 were dispersed in 95 g of a vehicle for stoving enamel, having the following formulation:

59 parts of xylene,
22 parts of alkyd resin,
19 parts of melaminic resin,
which were ground for 60 minutes in a Red-Devil Model 5400 type mixing mill.

Thereby there was obtained an enamel with a good fluidity (flowability) which was spread with a 75 μm bar on cardboard provided with black bands for evaluation of the hiding power.

The spreadings were then baked in an oven at 125°C for 30 minutes. There was obtained in this way a bright (shining) covering enamel having a yellow tinge, having a good fastness and in particular an excellent resistance to heat and to overpainting.

## Claims

1. A composite ternary organic-inorganic pigment comprising from 70 to 90% by weight of a binary inorganic component of titanium dioxide and aluminium hydroxide, and from 10% to 30% by weight of a co-precipitated organic component comprising an organic azoic dye containing in its structure at least one carboxylic (—COOH) and/or sulphonic (—$SO_3H$) acid function, of the formula:

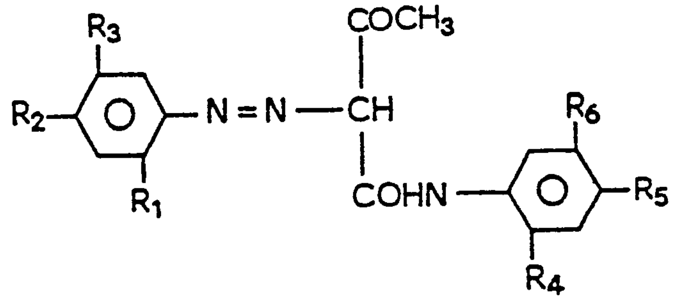

(I)

wherein:
$R_1$ is —$NO_2$, —$SO_3H$, or —COOH;
$R_2$ is —$NO_2$, —$SO_3H$, alkyl, or alkoxyl;
$R_3$ is H, halogen, or alkyl;
$R_4$ and $R_5$ are each H, halogen, alkyl, or alkoxyl; and
$R_6$ is H, halogen, or alkoxyl;
and wherein the carboxylic and/or sulphonic group of dye (I) is salified with metal cations selected from alkaline-earth metals, Al, Mn and Zn.

2. A composite pigment as claimed in claim 1, characterized in that the salified azoic dye is present in the pigment in an amount of from 10% to 25% by weight and in a weight ratio with respect to the titanium dioxide of from 1:1 to 1:5, and in a weight ratio with respect to the aluminium hydroxide of not more than 1:1.

3. A composite pigment as claimed in claim 2, characterized in that the weight ratio of the salified azoic dye with respect to the titanium dioxide is from 1:2 to 1:4.

4. A composite pigment as claimed in any of claims 1 to 3, characterized in that the inorganic binary component consists of aluminium hydroxide and titanium dioxide selected from rutile $TiO_2$, anatase $TiO_2$ and rutile-anatase $TiO_2$.

5. A composite pigment as claimed in claim 4, characterized in that as a $TiO_2$ source there is used an inorganic coloured pigment based on $TiO_2$.

6. A composite pigment as claimed in any of claims 1 to 5, characterized by having a specific surface area of from 20 to 100 $m^2/g$.

7. A composite pigment as claimed in claim 6, characterized by having a specific surface area of from 40 to 60 $m^2/g$.

8. A process for the preparation of a composite ternary pigment as claimed in claim 1, characterized in that a solution and/or suspension of the organic acid dye of formula (I) in an aqueous medium having a pH greater than 10.5 by the presence of sodium aluminate, after the introduction of the titanium dioxide, is gradually brought over a period of time of from 0.5 to 2 hours to a pH of from 9.5 to 10.5 and then, after the introduction of a salt of a metal selected from alkaline-earth metals, Al, Mn and Zn, in an amount substantially greater than the stoichiometric amount with respect to the acid dye, is brought to a pH of from 6.5 to 7.5 by the addition of a mineral acid at a temperature of from 40° to 80°C within a period of time from 0.5 to 2 hours.

9. A process as claimed in claim 8, characterized in that the titanium dioxide is selected from rutile $TiO_2$, anatase $TiO_2$, rutile-anatase $TiO_2$ and inorganic $TiO_2$-based coloured pigments.

10. A process as claimed in claim 8 or 9, characterized in that the sodium aluminate is used in

association with a minor amount of sodium hydroxide.

11. A process as claimed in any of claims 8 to 10, characterized in that the co-precipitation temperature is from 40° to 60°C.

12. A process as claimed in any of claims 8 to 11, characterized in that the co-precipitation of the organic dye in aqueous solution and/or suspension with sodium aluminate is carried out using HCl as a mineral acid.

13. A process as claimed in any of claims 8 to 12, characterized in that the alkaline-earth metal salt is selected from Ca, Mg, Ba and Sr salts.

14. A process as claimed in any of claims 8 to 13, characterized in that the salt of an alkaline-earth metal, Al, Mn or Zn is added in at least stoichiometric amount with respect to the acid dye used.

15. A process as claimed in claim 14, characterized in that the salt of an alkaline-earth metal, Al, Mn or Zn is added in an amount 2 to 4 times greater than the stoichiometric amount with respect to the acid dye used.

16. The use of a composite ternary pigment according to any of claims 1 to 7, for the colouring (dyeing) of plastics materials.

17. The use of a composite ternary pigment according to any of claims 1 to 7, for the preparation of lacquers, stoving enamels and air-drying enamels, inks and pastes for printing of textiles and natural and synthetic fibres.

18. Plastics materials, lacquers, stoving enamels and air-drying enamels, inks, pastes for printing of textiles and natural and synthetic fibres, when coloured or dyed with composite ternary pigments according to any of claims 1 to 7.

**Patentansprüche**

1. Ternäres organisches-anorganisches Komposit-Pigment, umfassend 70 bis 90 Gew.-% einer binären anorganischen Komponente aus Titandioxid und Aluminiumhydroxid und 10 bis 30 Gew.-% einer kopräzipitierten organischen Komponente, umfassend einen organischen Azofarbstoff, der in seiner Struktur mindestens eine Carbonsäure(—COOH)- und/oder Sulfonsäure(—$SO_3H$)-Funktion enthält, der Formel

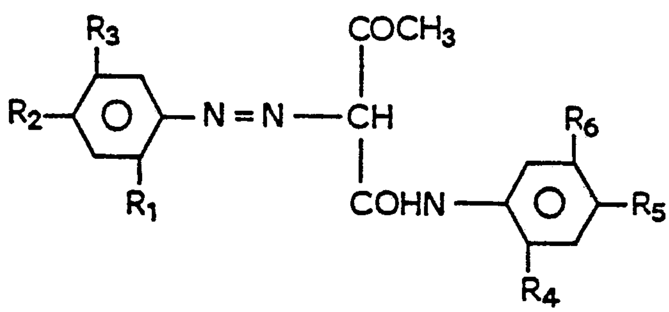

(I)

worin

$R_1$ —$NO_2$, —$SO_3H$ oder —COOH ist;
$R_2$ —$NO_2$, —$SO_3H$, Alkyl oder Alkoxyl ist;
$R_3$ H, Wasserstoff oder Alkyl ist;
$R_4$ und $R_5$ jeweils H, Halogen, Alkyl oder Alkoxyl sind; und
$R_6$ H, Halogen oder Alkoxyl ist

und worin die Carbonsäure- und/oder Sulfonsäuregruppe des Farbstoffes (I) durch Metallkationen, ausgewählt aus Erdalkalimetallen, Al, Mn und Zn, in die Salzform überführt worden ist.

2. Komposit-Pigment nach Anspruch 1, dadurch gekennzeichnet, daß der in Salzform vorliegende Azofarbstoff im Pigment in einer Menge von 10 bis 25 Gew.-% und in einem Gewichtsverhältnis bezüglich des Titandioxids von 1:1 bis 1:5 und in einem Gewichtsverhältnis bezügliche des Aluminiumhydroxids von nicht mehr als 1:1 anwesend ist.

3. Komposit-Pigment nach Anspruch 2, dadurch gekennzeichnet, daß das Gewichtsverhältnis des in Salzform vorliegenden Azofarbstoffes bezüglich des Titandioxids 1:2 bis 1:4 ist.

4. Komposit-Pigment nach irgendeinem der Ansprüche 1 bis 3, dadurch gekennzeichnet, daß die binäre anorganische Komponente aus Aluminiumhydroxid und Titandioxid, ausgewählt aus Rutil-$TiO_2$, Anatas-$TiO_2$ und Rutil-Anatas-$TiO_2$, besteht.

5. Komposit-Pigment nach Anspruch 4, dadurch gekennzeichnet, daß als $TiO_2$-Quelle ein anorganisches gefärbtes Pigment, das auf $TiO_2$ basiert, verwendet wird.

6. Komposit-Pigment nach irgendeinem der Ansprüche 1 bis 5, dadurch gekennzeichnet, daß es eine spezifische Oberfläche von 20 bis 100 $m^2/g$ aufweist.

7. Komposit-Pigment nach Anspruch 6, dadurch gekennzeichnet, daß es eine spezifische Oberfläche von 40 bis 60 $m^2/g$ aufweist.

8. Verfahren zur Herstellung eines ternären Komposit-Pigments nach Anspruch 1, dadurch gekennzeichnet, daß eine Lösung und/oder Suspension des organischen sauren Farbstoffs der Formel (I) in einem wäßrigen Medium mit einem pH größer als 10,5 durch die Gegenwart von Natriumaluminat nach der Zugabe von Titandioxid über einen Zeitraum von 0,5 bis 2 Stunden allmählich auf einen pH von 9,5 bis 10,5 gebracht wird und dann nach der Zugabe eines Salzes eines Metalles, ausgewählt aus Erdalkalimetallen, Al, Mn und Zn, in einer Menge, die wesentlich größer ist als die stöchiometrische Menge bezüglich des sauren Farbstoffs, durch die Zugabe einer Mineralsäure bei einer Temperatur von 40 bis 80°C innerhalb eines Zeitraums von 0,5 bis 2 Stunden auf einen pH von 6,5 bis 7,5 gebracht wird.

9. Verfahren nach Anspruch 8, dadurch gekennzeichnet, daß das Titandioxid ausgewählt ist aus Rutil-$TiO_2$, Anatas-$TiO_2$, Rutil-Anatas-$TiO_2$ und anorganischen gefärbten Pigmenten auf $TiO_2$-Basis.

10. Verfahren nach Anspruch 8 oder 9, dadurch gekennzeichnet daß das Natriumaluminat zusammen mit einer geringen Menge an Natriumhydroxid verwendet wird.

11. Verfahren nach irgendeinem der Ansprüche 8 bis 10, dadurch gekennzeichnet, daß die Kopräzipitations-Temperatur 40 bis 60°C ist.

12. Verfahren nach irgendeinem der Ansprüche 8 bis 11, dadurch gekennzeichnet, daß die Kopräzipitation des organischen Farbstoffs in wäßriger Lösung und/oder Suspension mit Natriumaluminat unter Vewendung von HCl als Mineralsäure durchgeführt wird.

13. Verfahren nach irgendeinem der Ansprüche 8 bis 12, dadurch gekennzeichnet, daß das Erdalkalimetallsalz ausgewählt ist aus Ca-, Mg-, Ba- und Sr-Salzen.

14. Verfahren nach irgendeinem der Ansprüche 8 bis 13, dadurch gekennzeichnet, daß das Salz von einem Erdalkalimetall, Al, Mn oder Zn wenigstens in stöchiometrischer Menge bezüglich des verwendeten sauren Farbstoffs hinzugefügt wird.

15. Verfahren nach Anspruch 14, dadurch gekennzeichnet, daß das Salz von einem Erdalkalimetall, Al, Mn oder Zn in einer 2- bis 4-fach größeren Menge als der stöchiometrischen Menge bezüglich des verwendeten sauren Farbstoffs hinzugefügt wird.

16. Verwendung eines ternären Komposit-Pigments nach irgendeinem der Ansprüche 1 bis 7 zum Färben von Kunststoffmaterialien.

17. Verwendung eines ternären Komposit-Pigments nach irgendeinem de Ansprüche 1 bis 7 für die Herstellung von Lacken, Einbrennlacken und lufttrocknenden Lacken, Druckfarben und Pasten zum Bedrucken von Textilien und natürlichen und synthetischen Fasern.

18. Kunststoffmaterialien, Lacke, Einbrennlacke und lufttrocknende Lacke, Druckfarben, Pasten zum Bedrucken von Textilien und natürlichen und synthetischen Fasern, wenn sie mit ternären Komposit-Pigmenten nach irgendeinem der Ansprüche 1 bis 7 gefärbt sind.

## Revendications

1. Une composition ternaire de pigments organo-minéraux comprenant de 70 à 90% en poids d'un constituant binaire minéral de dioxyde de titane et d'hydroxyde d'aluminium et de 10 à 30% en poids d'un constituant organique coprécipité comprenant un colorant organique azoïque contenant, dans sa structure, au moins un groupe fonctionnel carboxylique (—COOH) et/ou sulfonique ($SO_3H$) de formule

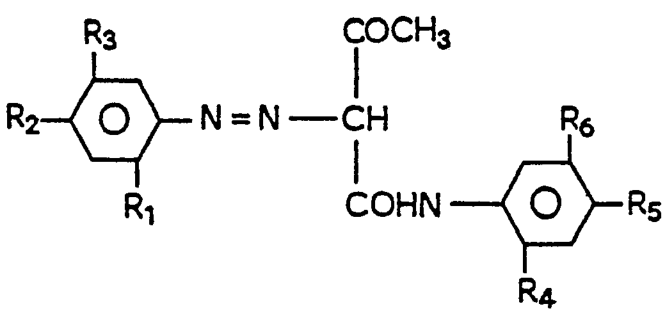

(I)

dans laquelle:

$R_1$ est —$NO_2$, —$SO_3H$ ou —COOH;
$R_2$ est —$NO_2$, —$SO_3H$, alkyle ou alkoxyle;
$R_3$ est H, halogène ou alkyle;
$R_4$ et $R_5$ sont chacun H, halogène, alkyle ou alkoxyle;
$R_6$ est H, halogène ou alkoxyle;

et dans laquelle le groupe carboxylique et/ou sulfonique du colorant (I) est salifié par des cations de métaux choisis dans le groupe comprenant les métaux alcalino-terreux, Al, Mn et Zn.

2. Un pigment composite selon la revendication 2, caractérisé en ce que le colorant salifié azoïque est présent dans le pigment en quantité de 10% à 25% en poids, et en un rapport pondéral par rapport au dioxyde de titane de 1/1 à 1/5 et un rapport pondéral par rapport à l'hydroxyde d'aluminium qui n'est pas supérieur à 1/1.

3. Un pigment composite selon la revendication 2, caractérisé en ce que le rapport pondéral du colorant azoïque salifié/dioxyde de titane est de 1/2 à 1/4.

4. Un pigment composite selon l'une quelconque des revendications 1 à 3, caractérisé en ce que le constituant binaire minéral consiste en un hydroxyde d'aluminium et en un dioxyde de titane choisi parmi rutile $TiO_2$, anatase $TiO_2$ et rutile-anatase $TiO_2$.

5. Un pigmente composite selon la revendication 4, caractérisé en ce que l'on utilise en tant que source de $TiO_2$ un pigment minéral coloré à base de $TiO_2$.

6. Un pigment composite selon l'une des revendications 1 à 5, caractérisé par une surface spécifique de 20 à 100 $m^2/g$.

7. Un pigment composite selon la revendication 6, caractérisé par une surface spécifique de 40 à 60 $m^2/g$.

8. Un procédé pour la préparation d'un pigment composite ternaire selon la revendication 1, caractérisé en ce que le pH d'une solution et/ou suspension du colorant organique acide répondant à la formule (I), dans un milieu dont le pH est supérieur à 10, 5 du fait de la présence d'aluminate de sodium, après introduction du dioxyde de titane, est graduellement porté en une période de 0,5 à 2 heures jusqu'à une valeur de pH de 9,5 à 10,5 et puis, après introduction d'un sel d'un métal choisi parmi les métaux alcalino-terreux, Al, Mn et Zn en quantité substantiellement supérieure au rapport stoechiométrique par rapport au colorant acide est porté, à un pH de 6,5 à 7,5 par addition d'un acide minéral à une température de 40° à 80°C en une période de 0,5 à 2 heures.

9. Un procédé selon la revendication 8, caractérisé en ce que le dioxyde de titane est choisi parmi le rutile $TiO_2$, anatase $TiO_2$, rutile-anatase $TiO_2$ et des pigments minéraux colorés à base de $TiO_2$.

10. Un procédé selon la revendication 8 ou 9, caractérisé en ce que l'aluminate de sodium utilisé est associé à une faible quantité d'hydroxyde de sodium.

11. Un procédé selon l'une des revendications 8 à 10, caractérisé en ce que la température de la coprécipitation est de 40 à 60°C.

12. Un procédé selon l'une des revendications 8 à 11, caractérisé en ce que la coprécipitation du colorant organique en solution et/ou suspenson aqueuse avec l'aluminate de sodium est effectuée en utilisant HCl comme acide minéral.

13. Un procédé selon l'une des revendications 8 à 12, caractérisé en ce que le sel de métal alcalino-terreux est choisi parmi les sels de Ca, Mg, Ba et Sr.

14. Un procédé selon l'une des revendications 8 à 13, caractérisé en ce qu'on ajoute un sel de métal alcalino-terreux, de Al, Mn ou Zn en une quantité au moins stoechiométrique par rapport à la quantité utilisée du colorant acide.

15. Un procédé selon la revendication 14, caractérisé en ce qu'on ajoute un sel de métal alcalino-terreux, de Al, Mn ou Zn en une quantité 2 à 4 fois supérieure à la quantité stoechiométrique par rapport à celle du colorant acide.

16. Application du pigment ternaire composite selon l'une des revendications 1 à 7, pour colorotion ou la teinture de matériaux plastiques.

17. Application du pigment ternaire composite selon l'une des revendications 1 à 7, pour la préparation de laques, d'émaux cuits au four et d'émaux séchant à l'air, d'encres et pâtes pour l'impression de textiles et de fibres naturelles et synthétiques.

18. Matériaux plastiques, laques, émaux cuits au four et émaux séchant à l'air, encres, pâtes pour l'impression de textiles et de fibres naturelles et synthétiques, lorsqu'ils sont teints ou colorés à l'aide des pigments composites ternaires selon l'une des revendications 1 à 7.